# EUROPEAN PATENT SPECIFICATION

(11) **EP 1 895 192 B1**
(45) Date of publication and mention of the grant of the patent: **15.12.2010**
(21) Application number: 07253429.0
(22) Date of filing: 30.08.2007
(51) Int. Cl.: F16H 9/16, F16H 9/18, F16H 63/06

(54) **Belt type continuously variable transmission**
Stufenlos verstellbares Riemengetriebe
Transmission contenue à vitesse du type à courroie

(30) Priority: 30.08.2006 JP 2006233812
(43) Date of publication of application: 05.03.2008
(73) Proprietor: Yamaha Hatsudoki Kabushiki Kaisha, Shizuoka-ken 438-8501 (JP)
(72) Inventor: Sugitani, Tsuyoshi, Iwata-shi, Shizuoka-ken 438-8501 (JP)
(74) Representative: Lamb, Martin John Carstairs

(56) References cited:
- EP-A- 0 321 921
- EP-A- 1 521 017
- US-A- 4 973 288

## Description

### FIELD OF THE INVENTION

The present invention relates to a belt type continuously variable transmission for continuously controlling transmission gear ratio by contacting a belt with a V-groove of a driving pulley and a driven pulley, such as may be provided for a straddle type vehicle according to the preamble of claim 1, and as it is disclosed in EP 1521017, which is family member of JP 2005133929A.

### BACKGROUND OF THE INVENTION

A V-belt type continuously variable transmission is widely used for straddle type vehicles such as motorcycles of a scooter type. The V-belt type continuously variable transmission has a driving pulley coupled with a driving power source such as an engine and a driven pulley connected with a driving wheel by way of a final-drive mechanism and so forth, in which a V-belt is contacted with both pulleys, a groove width adjusting mechanism changes the width of each pulley for adjusting the diameter of each pulley for contacting with the V-belt, and a transmission gear ratio between both pulleys is continuously adjusted.

Usually, the driving pulley and the driven pulley are formed with a fixed pulley and a movable pulley for forming a V-groove between these pulleys. Each movable pulley is provided for moving in the direction of the supporting shaft. The groove width adjusting mechanism moves the movable pulley to adjust transmission gear ratio continuously.

A conventional V-belt type continuously variable transmission of this kind uses an electric motor for moving the movable pulley on the side of the driving pulley for adjusting the groove width. As a moving thrust of the electric motor is capable of moving the movable pulley in both of the direction for narrowing the groove width (Top side) and the direction of widening the groove width (Low side) of the driving pulley, the groove width can be arbitrarily adjusted.

When the electric motor is used for moving the movable pulley, the control of transmission gear ratio is executed by detecting a driving state of the engine based on the engine speed and the throttle opening. To confirm whether actual transmission gear ratio is an appropriate value or not, the position of each movable pulley is detected and the rotational speed of the driven pulley is detected.

As a method for detecting the rotational speed of the driven pulley, a method is known such that an iron plate is attached to the driven pulley and a magnetic sensor detects the rotation of the plate, as described in JP-A-2005-133929 (Patent Document 1).

For example, in the continuously variable transmission in the Patent Document 1, a sensor plate is provided on the side of the driven pulley, and magnetic sensors are placed so that the probes face each other at the outer circumference of the sensor plate. The magnetic sensor is mounted to a speed reducer cover of the inside of the belt case and placed between the speed reducer cover and the driven pulley. The outer circumference of the sensor plate has plural projections, and outputs from the magnetic sensors vary according to the changes of the shape of the projections. An output signal of the magnetic sensor is supplied to a controller outside the belt case through wires of the magnetic sensors, and the rotational speed of the driven pulley is detected based on the changes in these output signals.

As seen in the continuously variable transmission according to Patent Document 1, when the magnetic sensor is mounted to the speed reducer cover, because the magnetic sensor is housed in the inside of the belt case, a wire is necessary to be lead to an outside in an outer wall of the belt case to lead a wire of the magnetic sensor to the outside of the belt case, there is a drawback such that dust and rain water enter the belt case from this opening. If dust or the like entered the belt case adheres to the V-belt, the V-belt slips. Therefore, it is preferable that the inside of the belt case is maintained clean.

To solve the problem, a seal material may be used to seal the opening formed in the outside wall of the belt case.

In addition, if the magnetic sensor is placed between the speed reducer cover and the driven pulley, the width of the belt case must be increased to accommodate the magnetic sensor, thus increasing the width of the vehicle body. This results in another drawback, in that the bank angle of the vehicle body is reduced.

Another example of a continuously variable belt transmission, for use in driving the front wheels of a motor vehicle, is described in US Patent 4, 973, 288. U-shaped grooves are formed on top of the fixed sheaves of the driving and driven sheaves. Electromagnetic sensors that count the U-shaped grooves detect the number of rotations of the driving and driven shafts. The sensors are mounted on a transmission casing.

### SUMMARY OF THE INVENTION

The belt type continuously variable transmission according to the present invention is a belt type continuously variable transmission for continuously controlling gear ratio by changing a groove width between a driving pulley and a driven pulley adapted to be coupled to a rear wheel of a vehicle, in which the driven pulley is housed in a belt case, the rotational speed of the driven pulley is measured by a magnetic sensor for sensing a magnetic material, and characterized in that the magnetic sensor is mounted to an outer wall forming a part of the belt case and is positioned higher than an axle of a rear wheel of an associated vehicle.

The magnetic sensor may be mountable to the outer wall of the belt case from the exterior of the belt case. In one embodiment, an opening is formed in the outer wall forming the belt case, and the magnetic sensor is inserted in the opening.

In one embodiment, a seal material is interpose between the magnetic sensor and the opening, and the seal material seals a gap between the magnetic sensor and the opening.

In one embodiment, an end of the magnetic sensor is positioned on the outside of core fiber of a belt where the driven pulley has the maximum diameter for contacting with the belt.

According to the belt type continuously variable transmission of an embodiment of the present invention the driven pulley is housed in the belt case, the rotational speed of the driven pulley is measured by the magnetic sensor sensing a magnetic material, and the magnetic sensor is mounted to an outside wall forming the belt case from the outside. Therefore, the magnetic sensor can be exposed outside of the belt case. By connecting a wire of the magnetic sensor to the exposed part, the wire can be provided in the outside of the belt case. Thus, an opening for drawing out the wire need not be formed in the outside wall of the belt case. Consequently, the sealing performance of the belt case can be improved.

### BRIEF DESCRIPTION OF THE DRAWINGS

An embodiment according to the present invention will be described herein after with reference to accompanying drawings. In the drawings, in order to make the description clear, components having practically the same function are indicated with the same reference numeral. However, the present invention is not limited to the following embodiment.
FIG. 1 shows an external side view of the belt case for housing the continuously variable transmission 100 viewed from the left side.
FIG. 2 is a schematic view of a cross section taken along the surface A-A of the belt case 50 shown in FIG. 1.
FIG. 3 is schematic views of the driven pulley showing an example where the detected part is a pin in which FIG. 3(a) is an external side view and FIG. 3(b) is a cross section taken along the surface C-C.
FIG. 4 shows an example of the magnetic sensor 40 provided in the right direction.
FIG. 5 is a schematic view of a cross section taken along the surface B-B of the belt case 50 shown in FIG. 1.

### DETAILED DESCRIPTION OF DRAWINGS

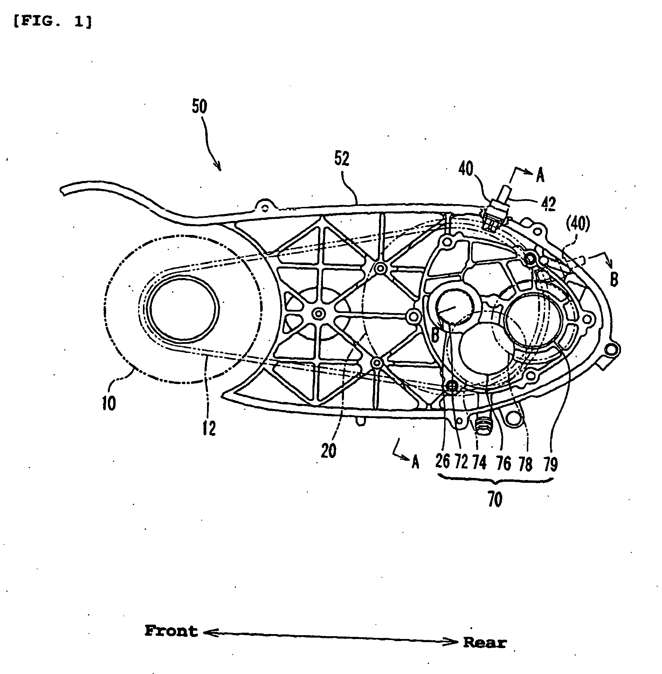

FIG. 1 shows an external side view of a belt case for housing a continuously variable transmission 100 as seen from the outside or, from the left side of the vehicle body. In order to be clearly understood the structure of the continuously variable transmission 100, a part of the components in the belt case is also shown. Referring to FIG. 1, the arrangement of a magnetic sensor 40 of the embodiment will be described.

The continuously variable transmission 100 is formed with a driving pulley 10 connected with a driving power source such as an engine (not shown in the drawing), a driven pulley 20 connected with a driving wheel by way of a final-drive mechanism 70, and a V-belt 12 contacted with both pulleys. Each of both pulleys 10 and 20 in the embodiment is formed with a non-magnetic material, and aluminum is used for reducing the weight.

As the width of the groove between the driving pulley 10 and the driven pulley 20 is changed by a groove width adjusting mechanism, the diameter of each pulley for contacting with a V-belt 12 is adjusted. Consequently, a transmission gear ratio between both pulleys is continuously adjusted. The example in the drawing shows the V-belt 12 in a low state, where the diameter on the side of the driven pulley 20 for contacting with the belt is at the maximum.

The continuously variable transmission 100 in the embodiment is placed at the left side of the vehicle body. The driving pulley 10 and the driven pulley 20 are placed on the front side and the rear side of the vehicle body respectively. Both pulleys 10 and 20 and the V-belt 12 are housed in a belt case 50. The belt case 50 is formed on a left side surface of the vehicle body, and a wall 52 forming the belt case 50 surrounds both pulleys 10 and 20 and the V-belt 12 and forms the exterior of the belt case 50.

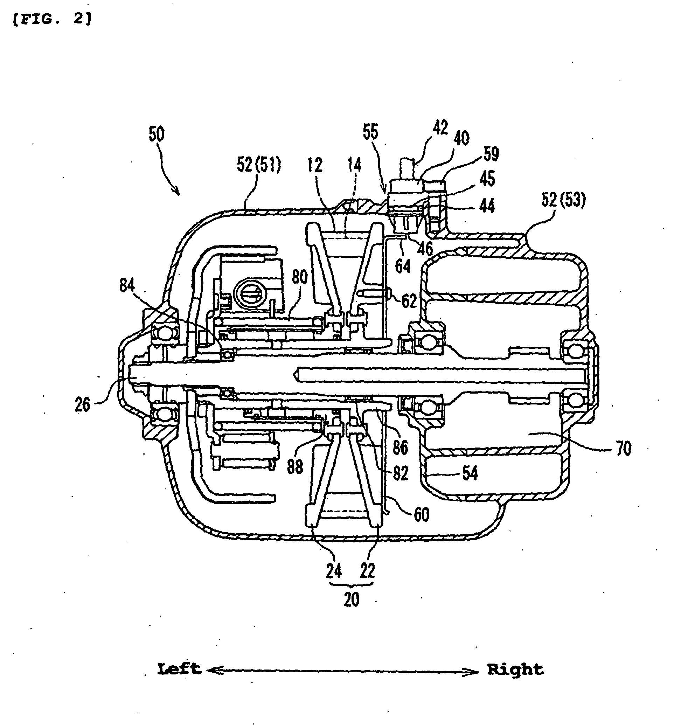

The rotational speed of the driven pulley 20 is measured by the magnetic sensor 40 for sensing a magnetic material. To the driven pulley 20 of the embodiment, a detected part formed with a magnetic material (for example, see a sensor plate 60 in FIG. 2) is provided. The magnetic sensor 40 is arranged to face the detected part.

The magnetic sensor 40 is mounted to the outside wall 52 forming the belt case 50 from the outside of the outside wall 52. In the example in the drawing, the magnetic sensor 40 is provided to an upper surface of the outside wall 52 from the outside of the upper surface and arranged so that an end 46 of the magnetic sensor 40 faces downwards.

When the belt type continuously variable transmission 100 is used, because the driven pulley 20 is housed in the belt case 50, the rotational speed of the driven pulley 20 is measured by the magnetic sensor 40 for sensing a magnetic material, and the magnetic sensor 40 is mounted to the outside wall 52 forming the belt case 50 from the outside, the magnetic sensor 40 can be exposed outside of the belt case 50. By connecting a wire 42 with this exposed part, the wire 42 can be arranged outside of the belt case 50.

When the wire 42 is arranged in the belt case 50, it is necessary to form an opening for drawing out the wire in the outside wall 52 of the belt case 50. However, with the present arrangement, even if an opening for drawing out the wire is not formed, the magnetic sensor 40 can be provided. As a result, the sealing performance of the belt case 50 can be improved. In addition, because a seal material for covering the opening for drawing out the wire is not necessary, the number of parts and the cost can be decreased.

When the wire 42 is arranged in the belt case 50, in order to prevent the wire 42 from coming in contact with the rotating driven pulley 20 and from being caught with the pulley, the wire 42 is preferably fixed in the belt case 50. However, according to the continuously variable transmission 100 of the present arrangement, because the wire 42 can be arranged outside the belt case 50, there is no need to fix the wire 42. Therefore, the number of parts and the cost can be further decreased.

With reference to FIG. 2 as well as FIG. 1, the arrangements of the continuously variable transmission 100 and the magnetic sensor 40 of the embodiment will be described in detail. FIG. 2 is a schematic view of a cross section taken along the surface A-A of the belt case 50 shown in FIG. 1, illustrating a schematic view of the internal structure of the belt case 50.

First, the outside wall 52 forming the belt case 50 is described. The outside wall 52 is a member for forming the exterior of the belt case 50. In this embodiment, the outside wall 52 on the side of the driven pulley 20 is formed with a belt case cover 51 surrounding the driven pulley 20, and a speed reducer case 53 for covering a final-drive mechanism 70 arranged on the right side of the driven pulley 20. A speed reducer cover 54 is provided to the inside of the belt case 50, and the speed reducer cover 54 divides the driven pulley 20 and the final-drive mechanism 70.

A transmission mechanism of the continuously variable transmission 100 is described next. The driven pulley 20 and the V-belt 12 are housed in the belt case 50 on the side of the driven pulley 20. The driven pulley 20 is in the shape of two cones arranged with the apexes opposed to each other. In the example in the drawing, the driven pulley is formed with a fixed pulley 22 formed on the right side and the movable pulley 24 formed on the left side of the vehicle body.

Each of both fixed pulley 22 and movable pulley 24 is supported by a supporting shaft 26. Specifically, the fixed pulley 22 is supported by the supporting shaft 26 by way of a hub 86 with the bearing 82 inserted in an outer circumference in the middle portion in the direction of the length of the supporting shaft 26 and with the bearing 84 provided to a position closer to the outside of the vehicle body than the position of the bearing 82 or, in other words, on the left side of the supporting shaft 26 in FIG. 2.

On the other hand, the movable pulley 24 is supported by the supporting shaft 26 by way of a hub 88 formed on the outer circumference of the hub 86. The movable pulley 24 is provided for moving in the direction of the length of the supporting shaft 26 and urged in the direction for narrowing the width of the groove of the driven pulley 20 with the force of the spring 80 or, in other words, in the direction of the fixed pulley 22.

In the continuously variable transmission 100 in the embodiment, the width of the groove of the driving pulley 10 is adjusted by an electric motor for controlling and moving the movable pulley on the side of the driving pulley 10. On the other hand, on the side of the driven pulley 20, a spring 80 is urged in the direction for narrowing the width of the groove as mentioned above. The V-belt 12 is contacted with the V-grooves of the driving pulley 10 and the driven pulley 20.

In the structure, when the diameter of the side of the driving pulley 10 for contacting with the V-belt 12 becomes larger, because the tension applied to the V-belt 12 increases, the V-belt 12 on the side of the driven pulley 20 is pulled. When this tension becomes larger than the urging force applied by the spring 80, the width of the groove on the side of the driven pulley 20 is enlarged. As a result, the diameter of the side of the driven pulley 20 for contacting with the V-belt 12 becomes smaller. In other words, the transmission gear ratio becomes smaller. Thus, the transmission gear ratio is controlled continuously by the continuously variable transmission 100.

The following description describes the magnetic sensor 40 for measuring the rotational speed of the driven pulley 20. The magnetic sensor 40 in the embodiment is a sensor for sensing a magnetic material and fixed to the outside wall 52 forming the belt case 50 with a bolt 59. Specifically, an opening 55 is formed in the outside wall 52 forming the belt case 50, and the magnetic sensor is inserted in the opening 55 from the outside of the outside wall 52. In the example in the drawing, the magnetic sensor 40 is provided to an upper surface of the outside wall 52. The opening 55 formed in the upper surface has an inner diameter corresponding to the outside diameter of the magnetic sensor 40, and the magnetic sensor 40 is inserted in the opening 55 from the outside of the upper surface of the outside wall 52. In other words, the magnetic sensor 40 is inserted with the end 46 of the magnetic sensor 40 facing downwards.

As the magnetic sensor 40 is inserted in the opening 55 from the outside of the outside wall 52, the rear end of the magnetic sensor 40 is exposed outside of the belt case 50. By connecting the wire 42 with this exposed part, the wire 42 can be formed outside of the belt case 50.

In addition, when the wire 42 is assembled, because the wire 42 can be connected with the magnetic sensor 40 after the magnetic sensor 40 is inserted in the opening 55, connecting the wire 42 becomes easy. In addition, when the maintenance work is performed for the magnetic sensor 40, because the magnetic sensor 40 can be detached and attached with the belt case 50 mounted to the vehicle body, the maintenance work is very easy, and the inside of the belt case 50 can be kept clean.

A seal material 44 is inserted between the magnetic sensor 40 and the opening 55, and the seal material 44 seals the space between the magnetic sensor 40 and the opening 55. The seal material 44 in the embodiment is an O-ring 44 formed of an elastic material (for example, rubber), and the O-ring 44 is inserted in a groove 45 formed on the outer circumference of the magnetic sensor 40. When the magnetic sensor 40 is inserted in the opening 55, the magnetic sensor 40 is pressed in the opening 55, so that the outer circumference of the O-ring 44 and the outside wall 52 defining the opening 55 is firmly engaged to form a sealing surface. As a result, the space between the magnetic sensor 40 and the opening 55 can be surely sealed. In other words, when the structure is used, the magnetic sensor 40 can be provided and the belt case 50 can be sealed at the same time.

The sealing member 44 is not limited to the O-ring made of rubber. Other seal materials such as a square seal, a gasket washer, and a liquid gasket can be used.

The magnetic sensor 40 in the embodiment is inserted in the opening 55 of the outside wall 55. However, if the magnetic sensor 40 is able to sense a magnetic material, the magnetic sensor 40 can be mounted without being inserted in the opening 55. For example, it is possible that the magnetic sensor 40 is fixed with the end 46 in contact with the outer surface of the outside wall 52. Even when the end 46 of the magnetic sensor 40 is in contact with the outside wall 52, if a magnetic sensor having a high sensitivity is used, the magnetic material of the detected part can be detected. Therefore, the rotational speed of the driven pulley 20 can be measured. In such the mounting structure, it is not necessary to form the opening 55 for inserting the magnetic sensor 40, and therefore the sealing performance of the belt case 50 can be improved further.

The end 46 of the magnetic sensor 40 inserted in the opening 55 is positioned on an outside of a core fiber (core material) 14 of the V-belt 12 in a low state or, in other words, in the state where the diameter of the side of the driven pulley 20 for contacting with the V-belt 12 is the largest. The core fiber 14 of the embodiment is made of aramid fiber (Kevlar), and the torque of the V-belt 12 is transmitted to the driven pulley 20 by this core fiber 14.

In the structure, because the magnetic sensor 40 is arranged on the outside of the core fiber 14 of the V-belt 12 in the low state or, in other words, the sensor 40 is accommodated in a wide space on the outside in the radial direction of the driven pulley 20, the size of the belt case 50 can be downsized in the direction of the width of the vehicle body. Accordingly, it is possible that the bank angle of the vehicle body is made wider.

As for a method for installing the magnetic sensor 40, it is possible to fix the magnetic sensor 40 on a speed reducer cover 54 dividing the driven pulley 20 and the final-drive device 70. However, if the magnetic sensor 40 is fixed on the speed reducer cover 54, the size of the belt case 50 becomes large in the width direction of the vehicle body as much as the space of the magnetic sensor 40. As a result, it is possible that the bank angle of the vehicle body becomes narrower. If the size of the belt case 50 is downsized in order for the bank angle of the vehicle body not to become narrower, because the housing space of the transmission oil contained in the speed reducer case 53 is reduced, the capacity of the transmission oil decreases.

In this respect, this embodiment has a construction such that the magnetic sensor 40 is not fixed on the speed reducer cover 54, and therefore the size of the belt case 50 can be downsized in the direction of the width of the vehicle body, and the space for housing the transmission oil is reserved sufficiently.

The magnetic sensor 40 is preferably positioned higher than an axle 79 of the rear wheel. With reference to FIG. 1, the torque of the driven pulley 20 is transmitted to the final-drive mechanism 70 housed in the speed reducer case 53. The final-drive mechanism 70 is formed with the supporting shaft 26 (a pulley shaft), a counter shaft 76, a final gear shaft 79 coaxial with the axle 79, and plural gears 72, 74, and 78 provided to each shaft. The torque transmitted to the final-drive mechanism 70 is decreased by using the plural gears 72, 74, and 78 and finally transmitted to the rear wheel through the axle 79, driving the rear wheel.

The magnetic sensor 40 in the embodiment is provided on the upper surface of the outside wall 55 and positioned in a place higher than the axle 79 of the rear wheel. When the magnetic sensor 40 is provided on the lower surface of the outside wall 52, it is possible that the magnetic sensor 40 comes in contact with the ground when the vehicle body is leaned. However, by arranging the magnetic sensor 40 in the place higher than the axle 79, the contact of the magnetic sensor 40 and the ground can be avoided even when the vehicle body is leaned. Therefore, it is possible that the bank angle of the vehicle body is increased. In addition, by arranging the magnetic sensor 40 in the place higher than the axle 79, even when rainwater or the like enters the belt case 50, the influence of the entering water can be decreased advantageously.

With reference to FIG. 2 the detected part of the driven pulley 20 to be detected by the magnetic sensor 40 is described. The detected part comprises a magnetic material sensed by the magnetic sensor 40 is provided on the driven pulley 20. The detected part of this embodiment is the sensor plate 60 mounted on the side of the fixed pulley 22 of the driven pulley 20. This sensor plate 60 is a member in the shape of a disk made of iron and mounted on the side of the fixed pulley 22. On the outer circumference of the sensor plate 60, a plurality of projections 64 are formed and arranged in a circle at equal intervals.

The end 46 of the magnetic sensor 40 inserted in the opening 55 is arranged to face the projection 64 of the sensor plate 60. Specifically, the end 46 of the magnetic sensor 40 is close to the projection 64 so as to sense an iron element included in the projection 64. The distance between both members is set to, for example, one to three millimeters.

In the above structure, when the fixed pulley 22 rotates, the sensor plate 60 also rotates with the rotation of the fixed pulley 22, and the projection 64 of the sensor plate 60 passes immediately in front of the magnetic sensor 40 one after another. When the projection 64 passes immediately in front of the magnetic sensor 40, the level of the detection of magnetic sensor 40 increases, and the rotational speed of the driven pulley 20 can be measured by measuring the change of the level of the detection over a predetermined time interval.

In the example in FIG. 2, the part detected by the magnetic sensor 40 is the projection 64 of the sensor plate 60. However, if the magnetic sensor 40 is able to sense a detected part formed in the driven pulley 20, the rotational speed of the driven pulley 20 can be measured. Therefore, the shape of the detected part is not limited. Therefore, the shape of the detected part can be a shape other than the shape of the sensor plate 60. For example, it is possible to form the driven pulley 20 with a magnetic material, to form the projection on the outer circumference of the driven pulley 20, and to use the magnetic sensor 40 for directly detecting the projection as a detected part.

In the embodiment, the plate 60 made of iron is used. However, if sensed by the magnetic sensor 40, a magnetic material other than iron can be used to form the structure. It is also possible to use a nonmagnetic material containing a magnetic material. As a magnetic material other than iron, for example, nickel, ferritic stainless, sintered material, and so forth can be used.

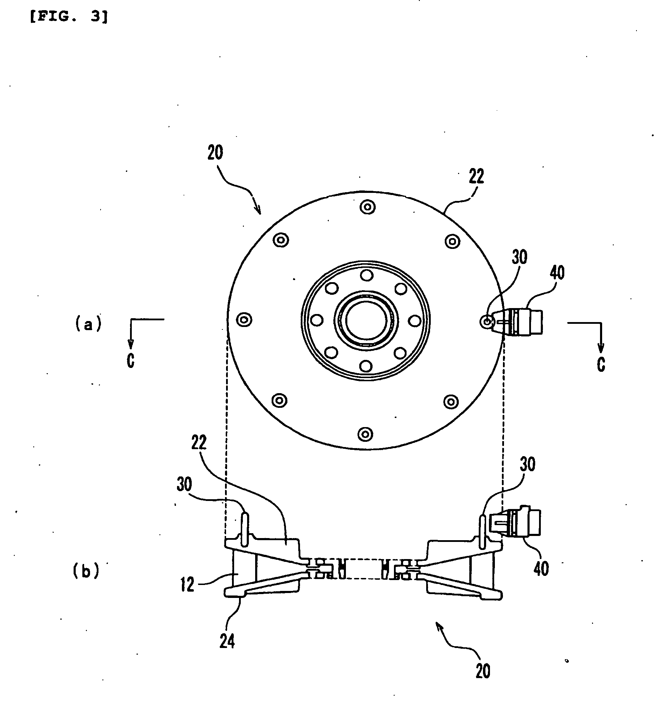

FIG. 3 shows another example of the detected part of the magnetic sensor 40. FIG. 3 (a) shows a side view of the outside of the driven pulley 20 viewed from the right side of the vehicle body or, in other words, from the side of the fixed pulley 22. FIG. 3 (b) shows a schematic view of a cross section indicated with the surface C-C in FIG. 3(a).

In the example of FIG. 3, the driven pulley 20 is formed with a nonmagnetic material (for example, aluminum), and a pin 30 containing a magnetic material (for example, iron) is provided to the outer circumference of the driven pulley 20 at equal intervals. The magnetic sensor 40 senses the magnetic material contained by the pin 30. In other words, this pin 30 is the part detected by the magnetic sensor 40.

According to the above structure, because the driven pulley 20 is formed with a nonmagnetic material, the weight of the transmission can be reduced if compared with the case where the driven pulley made of iron is used. In addition, because the detected part (the pin 30) is independently provided on the outer circumference on the driven pulley 20, the rotational speed of the driven pulley 20 can be directly measured. Therefore, it is not necessary to use a heavy material such as the sensor plate 60. Consequently, the weight of the transmission can be further reduced.

When the magnetic sensor 40 is mounted on the outside wall 52 of the belt case 50 as shown in this embodiment, because the detected part of the sensor plate 60 is arranged to be close to the magnetic sensor 40, it is necessary to enlarge the outside diameter of the sensor plate 60. However, when the outside diameter is large, because the weight of the sensor plate 60 also increases, it is not possible to fully make use of the advantage of the fact that the driven pulley 20 can be formed with a light nonmagnetic material. However, when the detected part is formed with the pin 30, even if the magnetic sensor 40 is mounted on the outside wall 52, it is possible to reduce the weight of the apparatus.

The pin 30 may be in the shape of a projection to be sensed by the magnetic sensor 40, and other shapes can be also used. For example, the pin 30 can be a pin having a shoulder or can be a bolt. A magnetic seat containing a magnetic material can be attached on the outer circumference of the driven pulley 20 as a detected part.

The magnetic sensor 40 shown in FIG. 2 is provided on the outside wall 52 from the outside of the upper surface or, in other words, provided with the end 46 of the magnetic sensor 40 facing downwards. However, if the magnetic sensor 40 is provided to the outside wall 52 from the outside, the direction of the mounting of the magnetic sensor 40 is not limited to the downward direction.

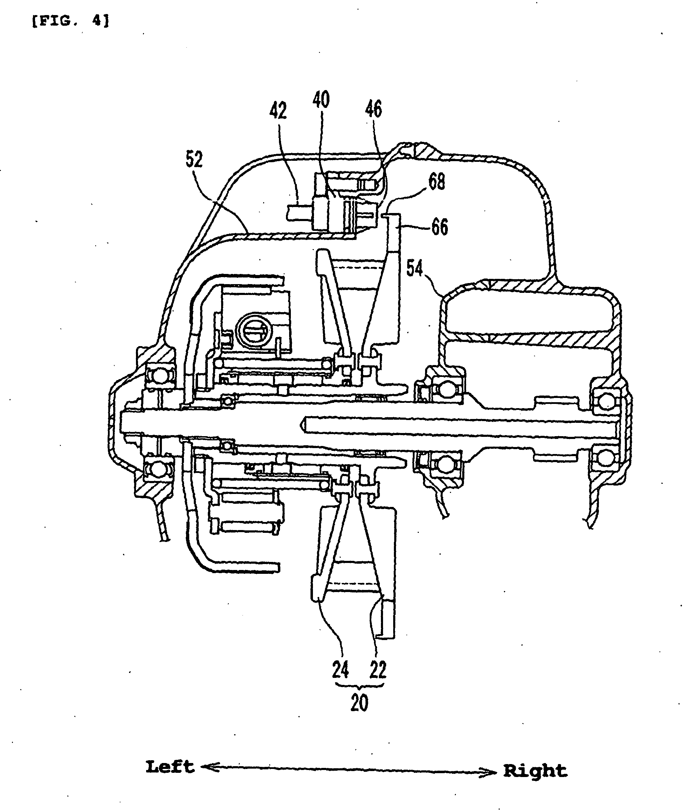

For example, FIG. 4 shows an example of the mounting structure where the magnetic sensor 40 is mounted in the right direction. In the example shown in the drawing, a sensor plate 66 in the shape of a disk is mounted to the outer circumference of the fixed pulley 22. The fixed pulley 22 is made of aluminum, and, on the other hand, the sensor plate 66 is made of iron. On the outer circumference of the sensor plate 66, a plurality of projections 68 facing the left side is formed and arranged at equal intervals. The magnetic sensor 40 is mounted to the outside wall 52 from the outside in the right direction, and the end 42 of the magnetic sensor 40 faces the end of the projection 68. Even when such structure is used, because the magnetic sensor 40 is exposed to the outside of the belt case 50, the wire 42 of the magnetic sensor 40 can be formed outside of the belt case 50.

The advantage of this structure is that the difference in the coefficients of thermal expansion of aluminum and iron can be used. Because the sensor plate 66 made of iron having a coefficient of thermal expansion lower than that of aluminum is provided on the outer circumference of the fixed pulley 22 made of aluminum, even if the fixed pulley 22 causes thermal expansion with frictional heat of the V-belt 12, a force is generated in the direction where the sensor plate 66 does not easily come out of position.

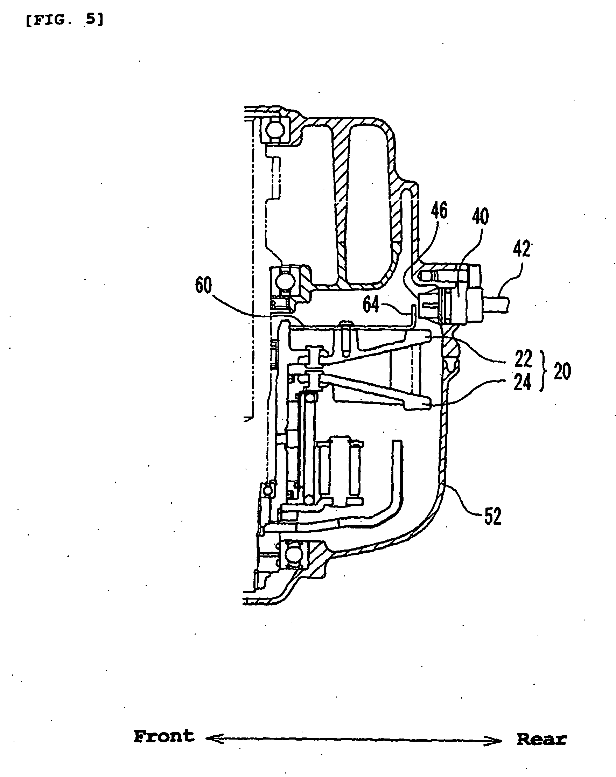

FIG. 5 shows another example of the mounting structure of the magnetic sensor. FIG. 5 is a schematic view of a cross section taken along the surface B-B of the belt case 50 shown in FIG. 1, illustrating a schematic view of the internal structure of the belt case 50. In the example in the drawing, the magnetic sensor 40 is mounted to the rear surface of the outside wall 52 from the outside of the rear surface, and the end 46 of the magnetic sensor 40 faces the front side of the vehicle body. Even in this structure, the rotational speed of the driven pulley 20 can be measured, and the magnetic sensor 40 can be exposed to the outside of the belt case 50.

The present invention has been described with reference to appropriate embodiments. However, the present invention is not limited to these embodiments but can be modified in various ways.

According to the embodiments of the present invention, while a belt case is downsized in the direction of the width, a belt type continuously variable transmission with an excellent sealing performance can be provided.

### Description of Reference Numerals

- 10:: driving pulley
- 12:: V-belt
- 14:: core fiber
- 20:: driven pulley
- 22:: fixed pulley
- 24:: movable pulley
- 26:: supporting shaft
- 40:: magnetic sensor
- 42:: wire
- 44:: seal material (O-ring)
- 45:: groove
- 46:: end
- 50:: belt case
- 51:: belt case cover
- 52:: outside wall
- 53:: speed reducer case
- 54:: speed reducer cover
- 55:: opening
- 60:: sensor plate
- 64:: projection
- 66:: sensor plate
- 68:: projection
- 70:: final-drive mechanism
- 76:: counter shaft
- 79:: axle (final gear shaft)
- 80:: spring
- 82:: bearing
- 84:: bearing
- 86:: hub
- 88:: hub
- 100:: belt type continuously variable transmission

## Claims

1. A belt type continuously variable transmission for continuously controlling gear ratio by changing a groove width between a driving pulley (10) and a driven pulley (20) adapted to be coupled to a rear wheel of an associated vehicle said rear wheel having an axle;
wherein the driven pulley (20) is housed in a belt case (50),
rotational speed of the driven pulley (20) is measured by a magnetic sensor (40) for sensing a magnetic material, and
**characterized in that** the magnetic sensor (40) is mounted to an outer wall (52) forming a part of the belt case (50) and is positioned higher than said axle of the rear wheel (79) of the associated vehicle.

2. The belt type continuously variable transmission according to claim 1, wherein the magnetic sensor (40) is mountable to the outer wall (52) of the belt case (50) from the exterior of the belt case (50).

3. The belt type continuously variable transmission according to Claim 1 or 2,
wherein an opening (55) is formed in the outer wall (52) forming a part of the belt case (50), and
the magnetic sensor (440) is inserted in the opening (55).

4. The belt type continuously variable transmission according to Claim 3,
wherein a seal material (44) is interposed between the magnetic sensor (40) and the opening (55), and
the seal material (44) seals between the magnetic sensor (40) and the opening (55).

5. The belt type continuously variable transmission according to Claim 1,2,3 or 4,
wherein an end (46) of the magnetic sensor (40) is positioned to the outside of core fiber (14) of a belt (12) where the driven pulley (20) has the maximum diameter for contacting with the belt (12).

6. The belt type continuously variable transmission according to any preceding Claim,
wherein the driven pulley (20) is adapted to be coupled to a rear wheel (79) of a straddle-type vehicle.

7. The belt type continuously variable transmission according to any preceding Claim,
wherein the belt case (50) is adapted to accommodate the rear wheel axle (79).

8. The belt type continuously variable transmission according to any preceding claim,
wherein the belt case (50) accommodates a final gear (78) coaxial with the rear axle (79), and the final gear (78) is in overlapping relation with the driven pulley (20).

## Patentansprüche

1. Stufenlos verstellbares Riemengetriebe für das kontinuierliche Regeln des Übersetzungsverhältnisses durch Verändern einer Rillenbreite zwischen einer Antriebsscheibe (10) und einer Abtriebsscheibe (20), die ausgebildet ist, um mit einem Hinterrad eines dazugehörenden Fahrzeuges gekuppelt zu werden;
wobei das Hinterrad eine Achse aufweist,
wobei die Abtriebsscheibe (20) in einem Riemengehäuse (50) aufgenommen wird, wobei die Drehzahl der Abtriebsscheibe (20) mittels eines Magnetsensors (40) für das Abtasten eines magnetischen Materials gemessen wird, und
**dadurch gekennzeichnet, dass** der Magnetsensor (40) an einer Außenwand (52), die einen Teil des Riemengehäuses (50) bildet, montiert und höher positioniert ist als die Achse des Hinterrades (79) des dazugehörenden Fahrzeuges.

2. Stufenlos verstellbares Riemengetriebe nach Anspruch 1, bei dem der Magnetsensor (40) auf die Außenwand (52) des Riemengehäuses (50) von der Außenseite des Riemengehäuses (50) aus montiert werden kann.

3. Stufenlos verstellbares Riemengetriebe nach Anspruch 1 oder 2,
bei dem eine Öffnung (55) in der Außenwand (52) gebildet wird, die einen Teil des Riemengehäuses (50) bildet, und
der Magnetsensor (40) in die Öffnung (55) eingesetzt wird.

4. Stufenlos verstellbares Riemengetriebe nach Anspruch 3,
bei dem ein Dichtungsmaterial (44) zwischen dem Magnetsensor (40) und der Öffnung (55) angeordnet ist, und
das Dichtungsmaterial (44) zwischen dem Magnetsensor (40) und der Öffnung (55) abdichtet.

5. Stufenlos verstellbares Riemengetriebe nach Anspruch 1, 2, 3 oder 4,
bei dem ein Ende (46) des Magnetsensors (40) auf der Außenseite der Kernfaser (14) eines Riemens (12) positioniert wird, wo die Abtriebsscheibe (20) den maximalen Durchmesser für das Kontaktieren des Riemens (12) aufweist.

6. Stufenlos verstellbares Riemengetriebe nach einem der vorhergehenden Ansprüche,
bei dem die Abtriebsscheibe (20) ausgebildet ist, um mit einem Hinterrad (79) eines Grätschsitz-Fahrzeuges gekuppelt zu werden.

7. Stufenlos verstellbares Riemengetriebe nach einem der vorhergehenden Ansprüche,
bei dem das Riemengehäuse (50) ausgebildet ist, um die Hinterradachse (79) aufzunehmen.

8. Stufenlos verstellbares Riemengetriebe nach einem der vorhergehenden Ansprüche,
bei dem das Riemengehäuse (50) ein Endrad (78) koaxial mit der Hinterachse (79) aufnimmt und das Endrad (78) in einer sich überdeckenden Beziehung zur Abtriebsscheibe (20) ist.

## Revendications

1. Système de transmission à variation continue du type à courroie, pour assurer le contrôle continu du rapport d'engrenage en changeant une largeur d'une rainure entre une poulie d'entraînement (10) et une poulie entraînée (20), adaptée pour être accouplée à une roue arrière d'un véhicule associé, ladite roue arrière comportant un essieu ;
la poulie entraînée (20) étant logée dans un carter de la courroie (50) ;
la vitesse de rotation de la poulie entraînée (20) étant mesurée par un capteur magnétique (40) pour détecter un matériau magnétique ; et
**caractérisé en ce que** le capteur magnétique (40) est monté sur une paroi externe (52), constituant une partie du carter de courroie (50), et est positionné à un niveau plus élevé que ledit essieu de la roue arrière (79) du véhicule associé.

2. Système de transmission à variation continue du type à courroie selon la revendication 1, dans lequel le capteur magnétique (40) peut être monté sur la paroi externe (52) du carter de la courroie (50) à partir de l'extérieur du carter de la courroie (50).

3. Système de transmission à variation continue du type à courroie selon les revendications 1 ou 2,
dans lequel une ouverture (55) est formée dans la paroi externe (52) constituant une partie du carter de courroie (50) ; et
le capteur magnétique (40) est inséré dans l'ouverture (55).

4. Système de transmission à variation continue du type à courroie selon la revendication 3,
dans lequel un matériau d'étanchéité (44) est placé entre le capteur magnétique (40) et l'ouverture (55) ; et
le matériau d'étanchéité (44) établissant l'étanchéité entre le capteur magnétique (40) et l'ouverture (55).

5. Système de transmission à variation continue du type à courroie selon les revendications 1, 2, 3 ou 4,
dans lequel une extrémité (46) du capteur magnétique (40) est positionnée vers l'extérieur de la fibre de noyau (14) d'une courroie (12), la poulie entraînée (20) ayant le diamètre maximal en vue de contacter la courroie (12).

6. Système de transmission à variation continue du type à courroie selon l'une quelconque des revendications précédentes,
dans lequel la poulie entraînée (20) est adaptée pour être accouplée à une roue arrière (79) d'un véhicule de type enjambeur.

7. Système de transmission à variation continue du type à courroie selon l'une quelconque des revendications précédentes,
dans lequel le carter de la courroie (50) est adapté pour recevoir l'essieu de la roue arrière (79).

8. Système de transmission à variation continue du type à courroie selon l'une quelconque des revendications précédentes,
dans lequel le carter de la courroie (50) reçoit un engrenage final (78) coaxial à l'essieu arrière (79), l'engrenage final (78) chevauchant la poulie entraînée (20).
